# EUROPEAN PATENT APPLICATION

(11) **EP 1 652 564 A1**
(43) Date of publication of application: **03.05.2006**
(21) Application number: 04077962.1
(22) Date of filing: 27.10.2004
(51) Int. Cl.: B01D 29/11, B01D 29/54, B01D 29/66

(54) **Back-flush device**

(71) Applicant: Eurlings Martin, 3740 Bilzen (BE); Inabata Europe S.A., 1050 Brussels (BE); Sowinvest S.C.R.L., 4141 Sprimont (BE)
(72) Inventor: Eurlings, Martin, 3740 Bilzen (BE); Albert, Philipe, 4910 Theux (BE); Vandendijk, Stefan, 3700 Tongeren (BE)
(74) Representative: Gevers, François

(57) **Abstract**

A back-flush device comprising an expansion vessel (17) comprising a diaphragm (19), and a first port (14) connected to said diaphragm, said first port being provided for feeding a filtrate. The back flush device further comprises a first nozzle (15) having a first valve (24) and being connected to said first port of the expansion vessel and provided to be connected to a filtrate outlet (6) of a filter device.

## Description

The present invention relates to a back flush device to use with a filter device, in particular with a cross flow filter device.

One known type of back-flush device for filter device comprises a buffer vessel with filtrate which is pressurised with compressed air or another gas. A further known type of back-flush device comprises a pump situated after the filter elements that pumps the filtrate back in reverse direction.

Such back-flush devices using pressurisation or pumping are discontinuous devices which do not allow a continuous process to be carried out therein, they are complicated and require an heavy maintenance.

It is an object of the invention to palliate at least some of these drawbacks by providing a device which can be used without interruption when cleaning should be done, more easy to carry out and to use and which does not require an heavy maintenance

To this end, the invention provides a back-flush device for a filter device comprising:
- an expansion vessel comprising :
   - a diaphragm,
   - a first port connected to said diaphragm, said first port being provided for feeding a filtrate,
- a first nozzle having a first valve and being connected to said first port of the expansion vessel and provided to be connected to a filtrate outlet of a filter device.

Here, the invention comprises an expansion vessel which does not need any pressurised gas nor additional pump at the filtrate port so the design and the maintenance of the system are simplified. Indeed, only one valve should be opened to fill the expansion vessel.

Advantageously, the expansion vessel further comprises a second port connected to said diaphragm, identical or different from said first port, said second port being provided for feeding the filtrate, and said device further comprises a second nozzle having a second valve and being connected to said second port of the expansion vessel and provided to be connected to a second filtrate outlet, being identical or different from said first filtrate outlet, said first and second valve being separately controlled.

The back-flush device according to this preferred embodiment is a continuous device allowing a continuous process to be carried out in the filter element when a cleaning step is needed. Indeed, to fill the expansion vessel with filtrate, when starting it, the first and the second valve are in open position to allow the filtrate for filling the expansion vessel. When the level of filtrate in the expansion vessel is sufficient, the valves (first, second or both) in open position have to be closed. When the filter device is clogged or showing deposits, the first or the second valve, will be opened to clean the surface of the filter element while respectively the second or the first is in closed position allowing the filter device to continuously operate.

Because the expansion vessel is connected by means of two nozzles to one or more filtrate outlets, and because the valves are separately controlled, when a filter has to be cleaned, it can be in a cleaning cycle while remaining in use.

Preferably, the back-flush device is provided for a cross flow filter element having two filter elements concentrically installed one to each other. In such a device, the first nozzle is connected to a first filtrate outlet, being the filtrate outlet of the first filter element and the second nozzle is connected to a second filtrate outlet, being the filtrate outlet of the second filter element.

Because the expansion vessel is connected to the two filtrate outlets, and because the valves are separately controlled, when a surface has to be cleaned, the first filter element can be in a cleaning cycle when the second is in use or inversely.

Moreover, the concentrate outlet of the filter element is ended by a valve, in particular by a throttle valve that allows to build up pressure as the expansion vessel is pressurised using the filtrate flow. The pressure of the filtrate flow is increased by throttling the raw material concentrates so that the pressure in the filter module is built up. This pressure will go through the filter element to the filtrate side of the module and thus, it is possible to use this pressure to pressurise the expansion vessel.

Once the expansion vessel has reached its maximal pressure, the first and the second valves were closed and the throttle valve is opened so that the cross flow effect comes back in the filtration device.

Advantageously, the diaphragm is in polybutylen rubber as it is an appropriate material for dilatation and for resistance, which should not interact with the filtrate as being a relatively inert material.

Other embodiments of the filtration device according to the invention are mentioned in the annexed claims.

Other characteristics and advantages of the invention will appear more clearly in the light of the following description of a particular non-limiting embodiment of the invention being a filtration device comprising a cross filter element and the back-flush device according to the invention, while referring to the figures.

Figure 1 is a cross section of the cross flow filter device to be connected to the back-flush device according to the invention

Figure 2 is a cross section of the cross flow filter device to be connected to the back-flush device according to the invention further comprising a circulation pump, outlet valves and inlet valves.

Figure 3 is a cross section of a complete filtration device further comprising a back-flush device, a circulation pump and a concentrate outlet throttle valve.

Figure 4a is a cross section of the expansion vessel of the back-flush device of the filtration device without filtrate and 4b is the same representation of the expansion vessel but full of filtrate.

Figure 5 is a cross section of the filtration device showing the filling and the pressurising of the expansion vessel with filtrate.

Figure 6 is a cross section of the filtration device showing the back-flushing of the first filter element to remove deposition of particles while the second filter element is still in operation.

Figure 7 is a cross section of the filtration device showing the back-flushing of the second filter element to remove deposition of particles while the first filter element is still in operation.

Figure 8 is a cross section of the filtration device showing the back-flushing of the first and of the second filter elements to remove deposition of particles. Circulation of raw material is continued to take the removed deposition into concentrate flow.

In the drawings, a same reference sign has been allotted to a same or analogous element of the cross flow filtration device according to the invention.

In figure, 1 it can be seen that the cross flow filter device to be connected to the back-flush device according to the invention comprises a longitudinal first filter element 1 and a longitudinal second filter element 2 installed substantially concentrically inside the first filter element 1.The cross flow filter device also comprises a housing 3 surrounding the first filter element 1, a raw material inlet 4, a concentrate outlet 5, and a first filtrate outlet 6 connected to the first filter element 1. As it is shown here, the raw material inlet 4 and the concentrate outlet 5 are preferably substantially aligned, in particular, aligned with said longitudinal central axis 8. In this preferred embodiment, the second filter element 2 is connected to its own filtrate outlet called the second filtrate outlet 7.

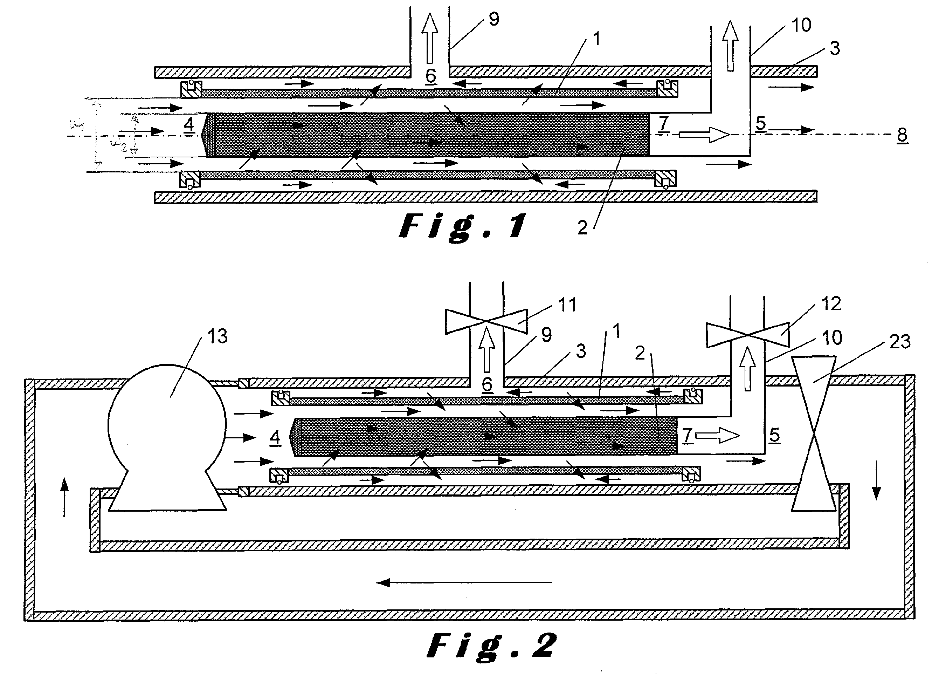

As illustrated in figure 2, the first 6 and the second filtrate outlets 7 are respectively extended by a third 9 and a fourth nozzle 10. The third nozzle 9 is ended by a third valve 11 and the fourth nozzle 10 is ended by a fourth valve 12.

Moreover, in a preferred embodiment, a circulation pump 13 is provided between the concentrate outlet 5 and the raw material inlet 4.

The raw material to be filtered can be pumped from a process plant or from a raw material tank to the cross flow filter device.

The raw material inlet is supplied tangentially to the filter media surface of the filter element as it is indicated by arrows.

The second filtrate outlet 7 is connected to a fourth nozzle 10 and the fourth nozzle 10 comprises a fourth valve 12. The first filtrate outlet 6 is also connected to a third nozzle 9 and comprises a third valve 11. Both valves 11,12 are preferably separately controlled allowing to operate the two filter elements 1,2 independently. The first filter element 1 can be in a cleaning cycle when the second 2 is in filtration operation.

When in service, the raw material is fed by the circulation pump 13 through the raw material inlet 4 into the space between the two filter element 1,2. Depending on the cut-off of the filter elements 1,2, the fluid (liquid or gas) passes through the filter elements 1,2, which fluid contains several particles which are smaller than the size of the filter element pores. Greater particles remain into the space between both filter element 1,2. A portion of the particles will be deposited upon the surface of the filter element and the other portion will be carried away by the flow. This is the reason why the outlet of raw material is called concentrate outlet 5 as the fluid is enriched with particles.

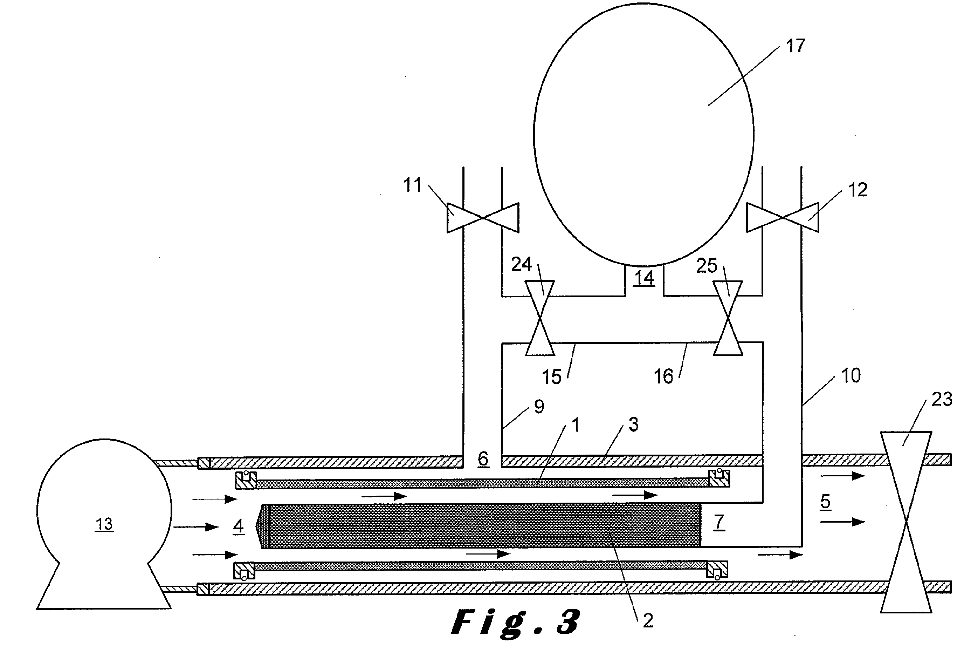

Figure 3 shows a cross section of the back-flush device connected to a cross flow filter device. The back-flush device comprises an expansion vessel 17 having a first port 14 (inlet) which is also the second port (outlet). A first nozzle 15 is connected to the first port 14 of the expansion vessel 17 and to said third nozzle 9 between the first filtrate outlet 6 and the third valve 11, and a second nozzle 16 is connected to the port 14 of the expansion vessel 17 and to the fourth nozzle 10 between the second filtrate outlet 7 and the fourth valve 12.

The first nozzle 15 comprises a first valve 24 between the third nozzle 9 and the port 14 of the expansion vessel. The second nozzle 16 comprises a second valve 25 between the fourth nozzle 10 and the port 14.

The third 11 and the fourth valves 12 of the filtrate outlets 6, 7 can be directly connected by nozzles to another process plant for immediate use or to one or two filtrate tanks for storage.

As aforementioned, the raw material to be filtered is fed by a circulation pump 13 from a process plant or from a raw material tank to the filtration device.

It should be intended that it can be the circulation pump 13 or another pump which supplies the raw material to be filtered to the filtration device. Indeed, the circulation pump 13 can make the connection between the raw material tank and the concentrate outlet 5 before supplying a mixture of the raw material and of the concentrate at the inlet 4 of the filtration device.

Moreover, the concentrate outlet 5 is ended by a fifth valve 23, being in particular a throttle valve. The throttle valve is provided to regulate the flow rate of the concentrate by throttling this later.

As illustrated in Figure 3, the back flush device has two nozzles. It should be noted that in a more general form, the back flush device could have only one nozzle. This type of back flush device would be connected to a filter device having only one filter element and only one outlet.

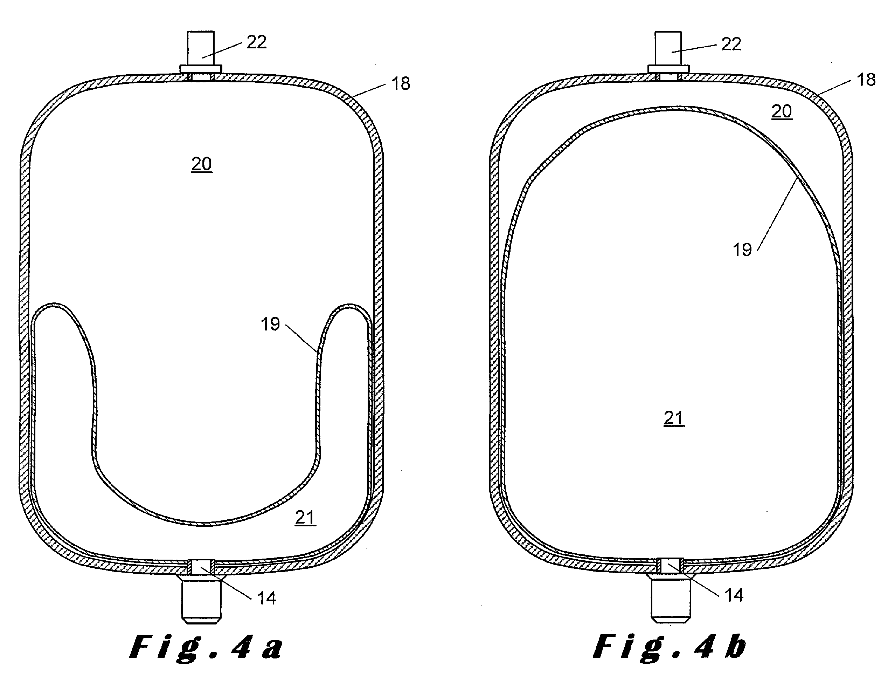

Figure 4 shows details of the expansion vessel of the back-flush device according to the invention.

Figure 4a shows the expansion vessel without filtrate and 4b is the same representation of the expansion vessel but full of filtrate. The expansion vessel is, in particular, an expansion vessel similar to those used in heating systems.

The expansion vessel comprises a housing 18, preferably made of stainless steel, a diaphragm 19 dividing the vessel in two parts, an external first part 20 provided to contain a gas (being in fact contain out of the diaphragm 19 and within the housing 18) and a internal second part 21 provided to contain a liquid (being the interior of the diaphragm 19). The diaphragm 19 is preferably interchangeable and made of butyl rubber. The material used to manufacture the expansion vessel housing 18 can be any material but preference is given to stainless steel because all component that are not made of this material can be damaged by salt or other substances that may optionally be contained in filtrate or in air.

Also the diaphragm 19 can be made of any material well known by those skilled in the art, but butyl rubber is preferred for its elasticity, resistance and neutrality. It should be understood that preferably, the material either for the expansion vessel housing 18 or the diaphragm 19 are chosen to not interact with liquid or gas that will be contained into the expansion vessel 17.

In this particular embodiment, the expansion vessel further comprises a single port 14 as inlet and outlet for filtrate since valves are present to impose the sense of the filtrate (coming in or out). It should be intended that two ports can also be present i.e. an inlet port and an outlet port without changing anything to the operation of the back-flush device.

The port 14 is provided to allow the filtrate coming from the cross flow filter device to fill through the diaphragm 19 the internal first part 21 of the expansion vessel 17 which is provided to contain the filtrate.

An additional valve 22 is provided in the second part 20 to allow excess of gas to go out to avoid the overpressure in the second art of the vessel.

As it can be seen in figure 3, and as mentioned before, when in service, the raw material is fed by the circulation pump 13 through the raw material inlet 4 into the space between the two filter elements 1,2. The fluid (liquid or gas) passes through the filter media of the filter elements 1,2 containing several particles which are smaller than the size of the filter media pores. Greater particles remain into the space between both filter elements 1,2. A portion of the particles will be deposited upon the surface of the filter media and the other portion will be carried out by the flow.

The fluid which has passed through the filter elements exits via the first 6 and the second filtrate outlet 7 and is either directed to another process plant, to a filtrate tank or to the back-flush device, depending on the valve positions. It should be considered that a filtrate tank and the back-flush device can be fed together by the filtration device according to the invention. The operation of the filtration device using the back-flush device is explained hereinafter in more details.

As it can be seen in figure 4b, the filtrate is fed in the first part 21 which increase in volume with filling. The filling with filtrate of this area results in a pressurisation of the second part 20 as the gas contained in the second part 20 is compressed by the increasing volume of the first part 21. Therefore, the second part 20 exerts also a pressure onto the diaphragm 19, which pressure is useful to clean one or both filter elements 1,2 when back-flush flow is required.

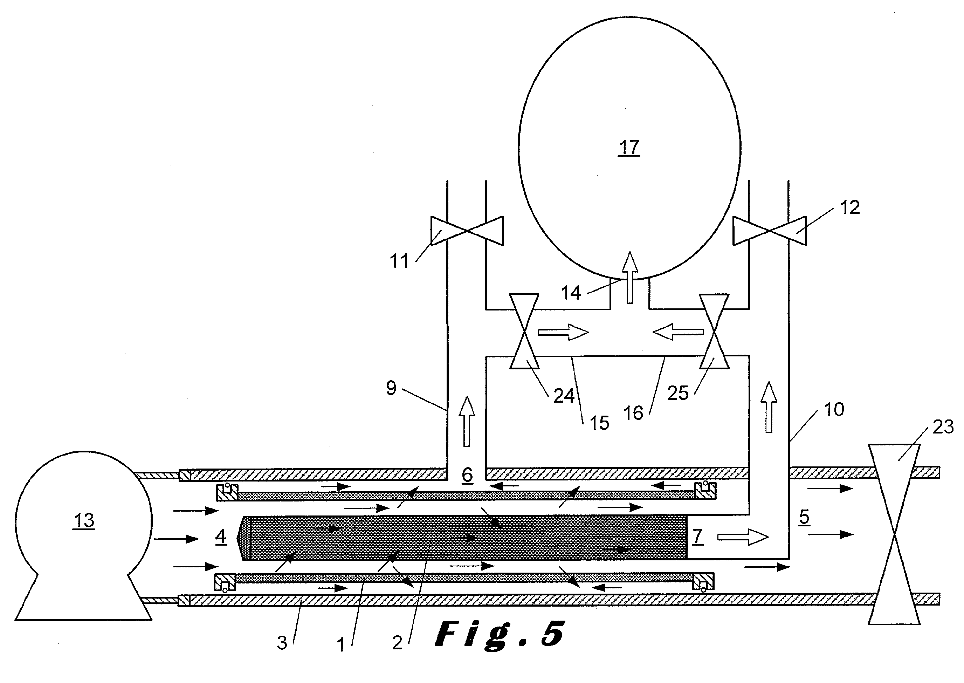

Figure 5 shows several possibilities for the filling and the pressurising of the expansion vessel with filtrate. The direction of the filtrate flows is indicated by arrows in the different nozzles.

To build up pressure, the first 24 and the second 25 valves should be in open position and the third 11 and the fourth valves 12 should be in a closed position. Therefore, the expansion vessel 17 is pressurised using the filtrate flow. By throttling the throttle valve 23 of the concentrate outlet 4, the pressure of the filtrate flow is increased so that the pressure builds up in the filtration device.

This pressure will go through the filter elements 1, 2 to the filtrate side of the filtration device and thus, this pressure can be used to pressurise the expansion vessel 17 by filing it with the filtrate.

It should be understood that the expansion vessel 17 can be filled only with the filtrate coming from the first filter element 1, from the second filter element 2 or both.

The following table (Table 1) shows different possible configurations of the valves to fill the expansion vessel with filtrate while the arrows in figure 5 show the direction of the filtrate flows during these operations.

**Table 1.-**

| | Third valve (11) | Fourth valve (12) | First valve (24) | Second valve (25) |
|---|---|---|---|---|
| Fill via second filter element (2) | open | close | close | open |
| Fill via first filter element (1) | close | open | open | close |
| Fill via both filter element (1 and 2) | close | close | open | open |

Once the expansion vessel 17 has reached its maximal pressure, the first 24 and/or the second valves 25 are closed and the fifth valve 23 is opened by throttling to allow the concentrate outlet so that the cross flow effect comes back in the module.

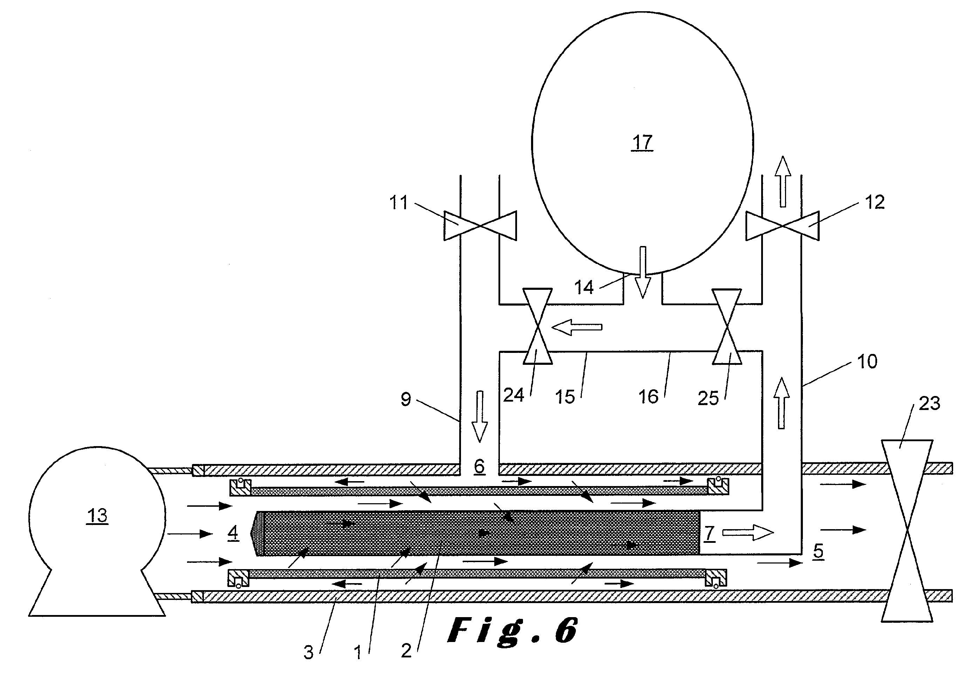

Figure 6 shows the back-flushing of the first filter element 1 to remove deposition of particles while the second filter element 2 is still in operation.

For the following explanation, it should be envisaged that the expansion vessel 17 has reached its maximal pressure, and that the filtration device has been operated between the filling of the expansion vessel and the cleaning of the first filter element 1.

The following table (Table 2) shows the position of the valves when the first filter element 1 is back-flushed while the second filter element 2 is in operation. The direction of the filtrate during this operation is indicated by arrows in figure 6.

**Table 2.-**

| | Third valve (11) | Fourth valve (12) | First valve (24) | Second valve (25) |
|---|---|---|---|---|
| Back-Flush of the first filter element 1, second filter element 2 in operation | close | open | open | close |

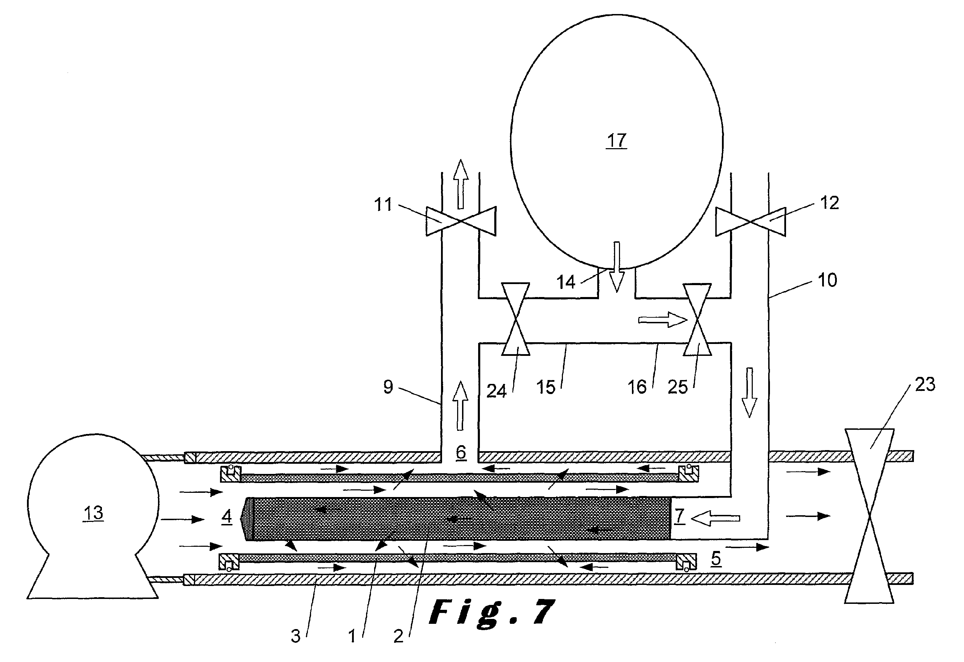

Figure 7 shows the back-flushing of the second filter element 2 to remove deposition of particles while the first filter element 1 is still in operation.

The following table (Table 3) shows the position of the valves during the back-flushing of the second filter element 2 while the operation of the first filter element 1. The direction of the filtrate during this operation is indicated by arrows in figure 7.

**Table 3.-**

| | Third valve (11) | Fourth valve (12) | First valve (24) | Second valve (25) |
|---|---|---|---|---|
| Back-Flush of the second filter element 2, first filter element 1 in operation | open | close | close | open |

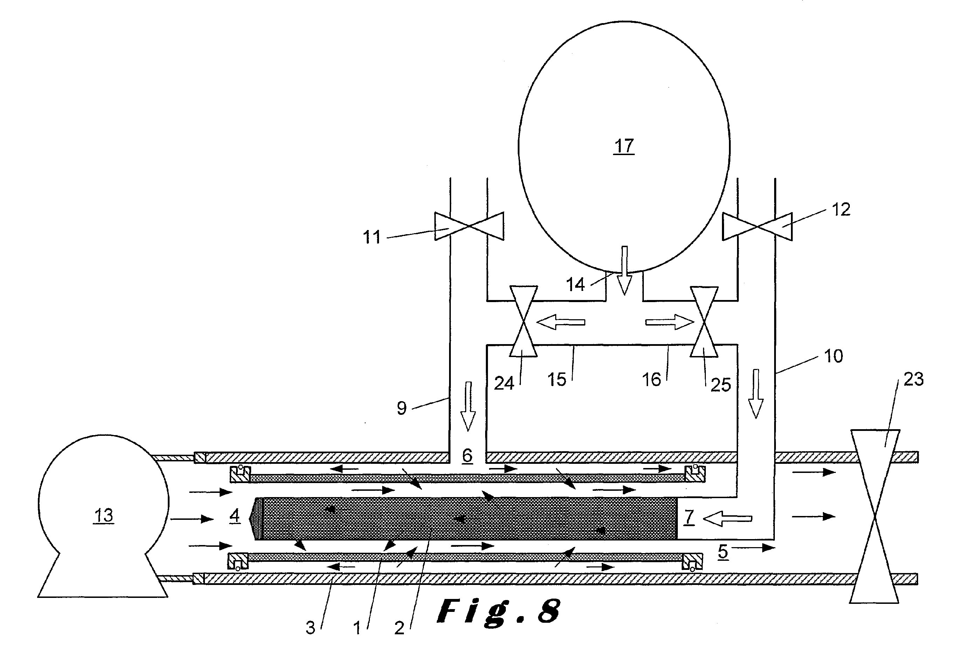

Figure 8 shows the back-flushing of the first 1 and of the second filter element 2. Circulation of raw material is maintained to carry away the removed deposition into concentrate flow.

The following table (Table 4) shows the position of the valves during the back-flushing of the first 1 and of the second 2 filter element while circulation of the fluid in the space between the two filter element is maintained to carry away the removed particle into the concentrate flow. The direction of the filtrate during this operation is indicated by arrows in figure 8.

**Table 4.-**

| | Third valve (11) | Fourth valve (12) | First valve (24) | Second valve (25) |
|---|---|---|---|---|
| Back-Flush of the first 1 and of the second filter element 2 | close | close | open | open |

Although the preferred embodiments of the invention have been disclosed for illustrative purpose, those skilled in the art will appreciate that various modifications, additions or substitutions are possible, without departing from the scope and spirit of the invention as disclosed in the accompanying claims. For example, the back flush device according to the present invention could be connected to a filter device having only one filter. In this case, the back flush device could have only one nozzle and only one valve.

## Claims

1. A back-flush device comprising:
• an expansion vessel comprising :
• a diaphragm,
• a first port connected to said diaphragm, said first port being provided for feeding a filtrate,
• a first nozzle having a first valve and being connected to said first port of the expansion vessel and provided to be connected to a filtrate outlet of a filter device.

2. Back-flush device according to claim 1, wherein
• the expansion vessel further comprises a second port connected to said diaphragm, identical or different from said first port, said second port being provided for feeding the filtrate, and
• said device further comprises a second nozzle having a second valve and being connected to said second port of the expansion vessel and provided to be connected to a second filtrate outlet, being identical or different from said first filtrate outlet, said first and second valve being separately controlled.

3. Back-flush device according to claim 1 or 2, wherein a concentrate outlet of said filter device is ended by a valve, in particular by a throttle valve.

4. Back flush device according to anyone of the claim 1 to 3, wherein the diaphragm of the expansion vessel is in polybutylen rubber.
